# EUROPEAN PATENT APPLICATION

(11) **EP 2 248 638 A1**
(43) Date of publication of application: **10.11.2010**
(21) Application number: 10250235.8
(22) Date of filing: 12.02.2010
(51) Int. Cl.: B26D 1/29, B02C 18/36

(54) **Improved rotary knife**

(30) Priority: 06.05.2009 GB 0907830
(71) Applicant: Combicut Limited, Caversham Reading Berkshire RG4 5BY (GB)
(72) Inventor: Walters, Keith, Binfield Heath Oxfordshire, RG9 4DR (GB)
(74) Representative: McLeish, Nicholas Alistair Maxwell

(57) **Abstract**

There is described a rotary knife (110;210) for use in a cutting apparatus. The rotary knife comprises a central hub (118), first and second sides of the knife, a plurality of arms (120;220), and a plurality of blades (170,172,174). The central hub defines an axis of rotation of the knife. The first and second sides of the knife are spaced apart in the axial direction. The plurality of arms extend outwardly from the hub. The plurality of blades (170,172,174) are carried by the arms such that a number of blades (170,174) disposed on the second side (110b) of the knife (110) is greater than a number of blades (172) disposed on the first side (110a) of the knife (110). There is also described a cutting apparatus comprising a rotary knife as described above.

## Description

### Field of the Invention

The present invention relates to a rotary knife for use in a cutting apparatus such as an industrial food processor, and a cutting apparatus comprising such a knife.

### Background of the Invention

Conventionally, industrial food processors, such as meat grinders, are used to process meat into the consistency of sausage meat or burger meat, for example.

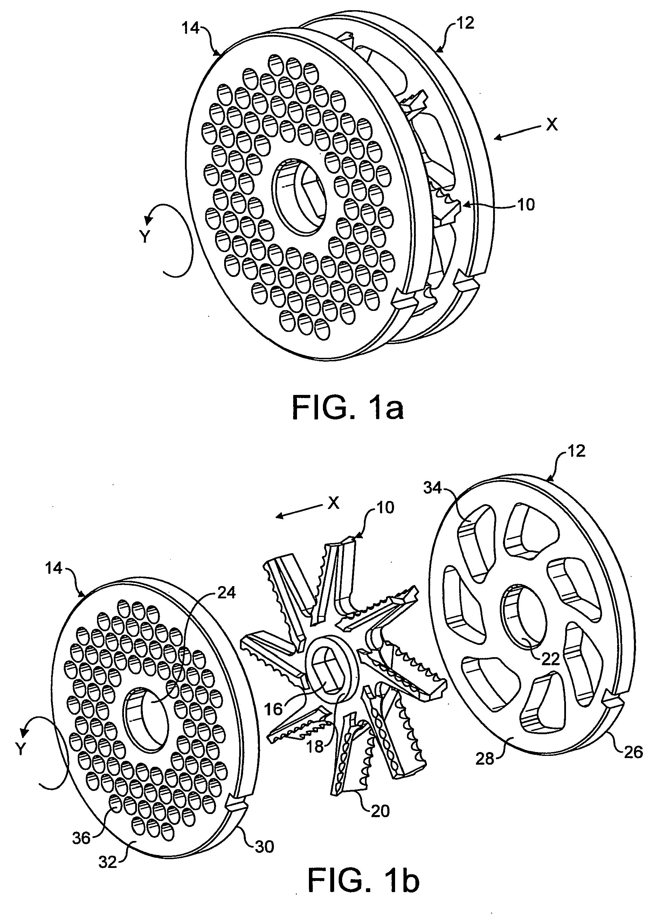

As shown in prior art Figures 1 a and 1b, an industrial food processor generally comprises a steel rotary knife 10 mounted coaxially between a first perforated disc 12 and a second perforated disc 14 that are also made of steel. The discs 12 and 14 are fixed within a tubular housing (not shown). The knife 10 is rotatable about an axis of the food processor. A diameter of the knife 10 is smaller than a diameter of the discs 12 and 14.

The knife 10 comprises a central aperture 16, a hub 18, and eight arms 20 extending outwards from the hub 18. The central aperture 16 is adapted to receive a driveshaft (not shown). In use, the driveshaft rotates about the axis of rotation in order to rotate the knife 10.

The discs 12 and 14 comprise circular central apertures 22 and 24 respectively, entry surfaces 26 and 30 respectively, and exit surfaces 28 and 32 respectively. In use, the driveshaft may rotate freely relative to the discs 12 and 14 within the circular central apertures 22 and 24. The discs 12 and 14 further comprise a plurality of holes 34 and 36 respectively. The holes 34 and 36 extend through the discs 12 and 14 in a direction parallel to the axis of rotation of the knife 10. The holes 34 in the first disc 12 are larger than the holes 36 in the second disc 14.

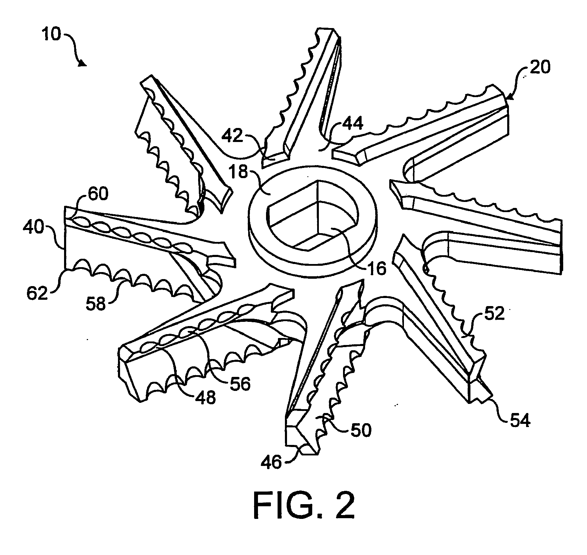

The prior art knife 10 will now be described in more detail with reference to Figure 2.

Each arm 20 of the knife 10 has respective first and second ends 40 and 42 respectively, the first end 40 being free and the second end 42 being connected to the hub 18 by means of a substantially annular portion 44 which surrounds the hub 18. A dimension of the annular portion 44 in the axial direction is less than that of the hub 18 such that the hub 18 protrudes axially from the annular portion 44.

Each arm 20 comprises a respective blade portion 46 that is substantially V-shaped in profile when viewed from the first end 40 of the arm 20. An axial dimension of each blade portion 46 is greater than the axial dimension of the annular portion 44 such that the blade portions 46 also protrude axially from the annular portion 44.

Each blade portion 46 comprises two planar surfaces 48 and 50 forming the V-shaped profile and two disc-engaging surfaces 52 and 54 that are perpendicular to the axis of rotation. The disc-engaging surfaces 52 and 54 and the planar surfaces 48 and 50 are arranged to have a substantially W-shaped profile when viewed from the first end 40 of the arm 20. Serrations 56 are provided in the blade portion 46 along an edge 60 joining the planar surface 48 with the disc-engaging surface 52. Similarly, serrations 58 are provided in the blade portion 46 along an edge 62 joining the planar surface 50 with the disc-engaging surface 54. The edges 60 and 62 act as blades of the knife 10. Thus, each blade portion 46 of the knife 10 may be seen as comprising two blades 60 and 62: one blade formed by the edge 60 on one side of the knife 10, and the other blade formed by the edge 62 on the other side of the knife 10.

Referring back to Figures 1 a and 1 b, in use, meat is fed through the food processor in the direction shown by arrow X. The meat is fed through the food processor using, for example, a feed auger (not shown) which also rotates about the axis of rotation. The driveshaft rotates the knife 10 in the direction shown by arrow Y such that the V-shaped blade portions 46 are on the forward edge of the arms 20 with the V-shaped profile pointing rearwardly with respect to the direction of rotation.

As shown in Figure 1a, the disc-engaging surface 54 rotates flush with the exit surface 28 of the first disc 12, and the disc-engaging surface 52 rotates flush with the entry surface 30 of the second disc 14. Friction is generated by the movement of each disc-engaging surface 52 and 54 of each blade portion 46 of the knife 10 against the entry surface 30 and the exit surface 28. Thus, there is friction between the knife 10 and the discs 12 and 14. This friction reduces the efficiency of the food processor.

As the meat emerges from the holes 34 in the exit surface 28 of the first disc 12, the blade portions 46 of the knife 10 cut the meat as the knife 10 rotates. More specifically, the meat is cut by a scissor action between the blades formed by the edges 60 of the blade portions 46 and the edges of the holes 34. Even more specifically, the meat is cut by a scissor action between the edges of the serrations 58 and the edges of the holes 34.

The meat continues to be forced through the food processor by the feed auger in direction X. Inevitably, some meat escapes around the first ends 40 of the knife arms 20 due to the reduced diameter of the knife 10 compared to that of the discs 12 and 14. This reduces the efficiency of the food processor.

Eventually, the meat reaches the second disc 14 within range of an arm 20. As the meat enters the holes 36 in the entry surface 30 of the second disc 14, the blade portions 46 of the knife 10 cut the meat for a second time as the knife 10 rotates. More specifically, the meat is cut by a scissor action between the blades formed by edges 62 of the blade portions 46 and the edges of the holes 36. Even more specifically, the meat is cut by a scissor action between the edges of the serrations 56 and the edges of the holes 36.

The processed meat is collected when it emerges from the holes 36 in the exit surface 32 of the second disc 14. The amount of meat which can be processed by an industrial food processor in a given time is of key importance.

Knives similar to that shown in Figures 1 a to 2 can lead to over-processing of the meat (i.e. meat which is cut up too finely). Over-processed meat has the disadvantage that the binding proteins are separated to a greater extent than meat which is not over-processed. Thus, over-processed meat does not bind together in the desired manner.

The present invention seeks to provide an improved rotary knife which enables more efficient operation of a cutting apparatus such as an industrial food processor. In particular, it is desirable to provide an improved rotary knife which avoids the disadvantage of over-processing meat.

### Summary of the Invention

According to a first aspect of the present invention, there is provided a rotary knife for use in a cutting apparatus. The rotary knife comprises a central hub defining an axis of rotation of the knife. The rotary knife further comprises first and second sides of the knife spaced apart in the axial direction. A plurality of arms extend outwardly from the hub. A plurality of blades are carried by the arms such that a number of blades disposed on the second side of the knife is greater than a number of blades disposed on the first side of the knife.

In use, the rotary knife of the first aspect provides the advantage of reducing friction and resistance generated by the rotational motion of the knife against adjacent discs. This is achieved because there are fewer blades disposed on the first side of the knife than in a conventional rotary knife which has the same number of blades on each side. In addition, the rotary knife of the first aspect provides the advantage of avoiding over-processing of the product because, compared to prior art knives, the meat is cut up less finely on the first side of the knife due to the fewer number of blades disposed on the first side of the knife.

Advantageously, the arms of the rotary knife comprise one or more primary arms and one or more secondary arms. Each primary arm carries a respective blade on the first side of the knife and a respective blade on the second side of the knife, whilst each secondary arm carries a respective blade on the second side of the knife only. This arm configuration provides a practical way of implementing the first aspect of the invention.

Advantageously, one or more of the arms of the rotary knife carries a plurality of blades on at least one of the first and second sides of the knife. This may be useful where only a limited number of arms can be provided on a given knife.

Advantageously, the number of primary arms is the same as the number of secondary arms. This configuration provides a level of symmetry in the knife so that the meat is cut evenly. More advantageously, successive arms (i.e. arms adjacent to one another) alternate between primary arms and secondary arms such that no two primary arms are adjacent to one another and no two secondary arms are adjacent to one another.

Advantageously, each arm of the rotary knife carries a respective blade on the second side of the knife. This is a simple and efficient way of ensuring that there are sufficient blades on the second side of the knife such that a reduced number may easily be provided on the first side of the knife.

Advantageously, each arm of the rotary knife comprises respective channels extending across a surface of the arm in a direction substantially parallel to the axis of rotation. The channels provide the added advantage of improving the flow of meat from the first side of the knife to the second side of the knife. Advantageously, a depth of the channels is approximately half of a circumferential dimension of the arms. Advantageously, a depth of the channels varies along the length of the channels. More advantageously, the depth of the channels decreases towards the centre of the channels. Advantageously, a width of the channels varies along the length of the channels. More advantageously, the width of the channels decreases towards the centre of the channels. Advantageously, the channels are arcuate in cross-section. More advantageously, the channels are approximately semi-circular in cross-section. Advantageously, the channels on each arm are radially offset from the channels on adjacent arms.

Advantageously, each arm may have a respective end that is free and a respective end that merges with the hub, each arm being arcuate between the respective free end and the respective hub end. This provides the added advantage of limiting the amount of meat that escapes via the free end of each arm during rotation of the knife. More advantageously, the arc of each arm is concave. More advantageously again, the arc is arranged such that in use the first end is forward of the second end with respect to a direction of rotation.

Advantageously, the central hub and the arms are integrally formed. This provides for ease of manufacture and structural rigidity.

Advantageously, each primary arm has a substantially V-shaped profile when viewed from the respective free end. More advantageously, the V-shaped profile is arranged such that in use the V-shaped profile points rearwardly with respect to a direction of rotation.

Advantageously, the rotary knife comprises an even number of arms. More advantageously, the rotary knife comprises four, six, eight or ten arms.

According to a second aspect of the present invention, there is provided a cutting apparatus comprising the rotary knife of the first aspect. The cutting apparatus may be an industrial food processor or a meat grinder.

Advantageously, the cutting apparatus further comprises a first perforated disc disposed on the first side of the knife and a second perforated disc disposed on the second side of the knife such that the knife is coaxially aligned between the first and second perforated discs. In one embodiment, a dimension of the perforations of the first perforated disc is greater than a dimension of the perforations of the second perforated disc.

### Brief Description of the Drawings

An embodiment of the present invention will now be described by way of example with reference to the accompanying drawings in which:
Figure 1a is a perspective view of a prior art rotary knife between two perforated discs;
Figure 1b is an exploded view of the arrangement shown in Figure 1a;
Figure 2 is a perspective view of the rotary knife shown in Figures 1a and 1b;
Figure 3 is a perspective view of a rotary knife according to a first embodiment of the present invention;
Figure 4a is an axial view of a first side of the rotary knife shown in Figure 3;
Figure 4b is an axial view of a second side of the rotary knife shown in Figure 3;
Figure 5a is a perspective view of the knife shown in Figures 3, 4a and 4b between two perforated discs;
Figure 5b is an exploded view of the arrangement shown in Figure 5a;
Figure 6a is a perspective view of a rotary knife according to a second embodiment of the present invention;
Figure 6b is an alternative perspective view of the rotary knife shown in Figure 6a;
Figure 7a is an axial view of a first side of the knife shown in Figures 6a and 6b;
Figure 7b is an axial view of a second side of the knife shown in Figures 6a and 6b;
Figure 8a is a perspective view of the knife shown in Figures 6a, 6b, 7a and 7b between two perforated discs; and
Figure 8b is an exploded view of the arrangement shown in Figure 8a.

### Detailed Description of Preferred Embodiments

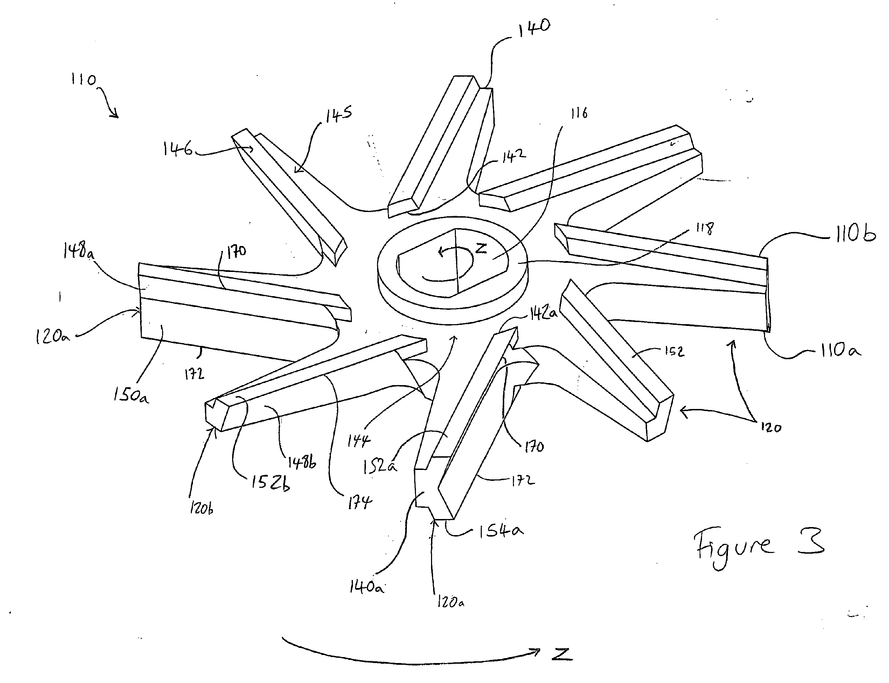

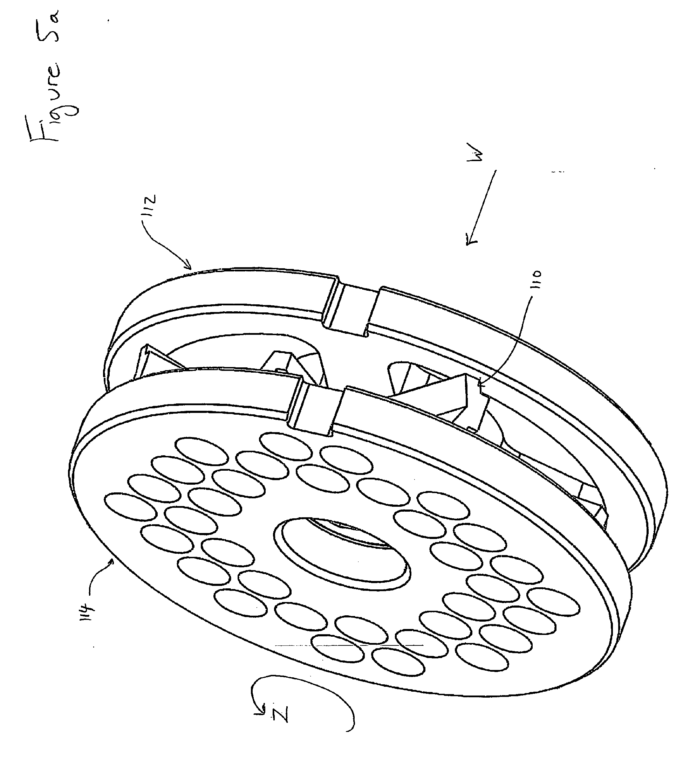

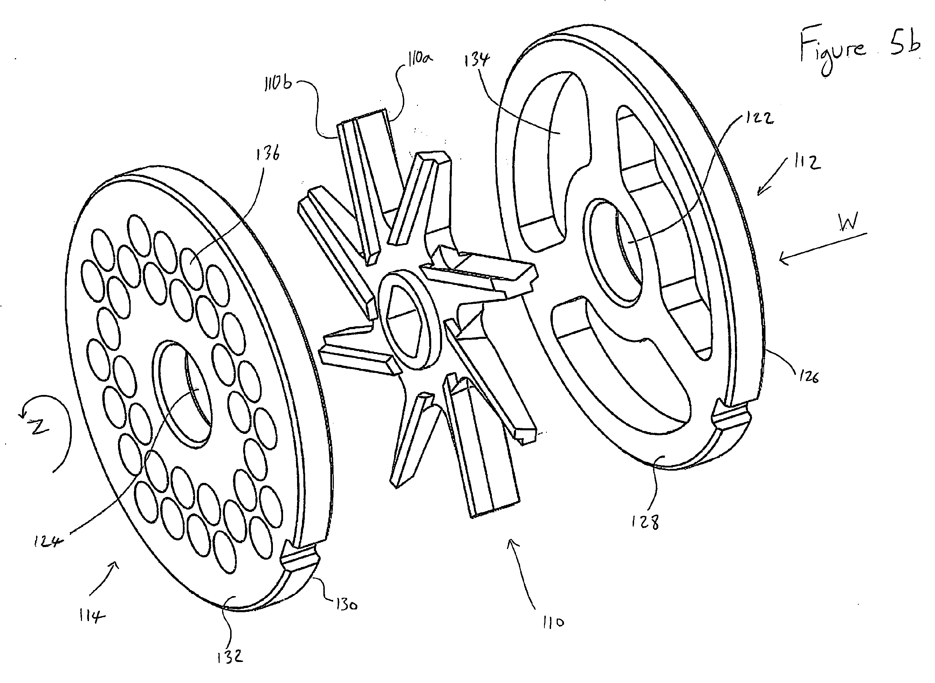

Figure 3 is a perspective view of a rotary knife 110 according to a relatively simple first embodiment of the present invention. The knife 110 is adapted for use in a cutting apparatus such as an industrial food processor. Thus, a cutting apparatus according to one embodiment of the present invention is an industrial food processor comprising the knife 110 mounted coaxially between two perforated discs 112 and 114 as shown in Figures 5a and 5b. The discs 112 and 114 are fixed within a tubular housing (not shown). The knife 110 is rotatable about an axis of the food processor in a direction shown by arrow Z by means of a driveshaft (not shown). Food is fed through the food processor in the direction shown by arrow W. A diameter of the knife 110 is smaller than a diameter of the discs 112 and 114.

In an alternative embodiment, an industrial food processor may contain a further knife 110 and disc such that the configuration of components within the tubular housing comprises two knives 110 interposed between three discs in a disc-knife-disc-knife-disc arrangement.

The discs 112 and 114 are substantially similar to those already described with reference to the prior art so they will only be described briefly here. The discs 112 and 114 comprise circular central apertures 122 and 124 respectively, entry surfaces 126 and 130 respectively, and exit surfaces 128 and 132 respectively. In use, the driveshaft may rotate freely relative to the discs 112 and 114 within the circular central apertures 122 and 124. The discs 112 and 114 further comprise a plurality of circular holes 134 and 136 respectively. The holes 134 and 136 extend through the discs 112 and 114 in a direction parallel to the axis of rotation of the knife 110. The holes 134 in the first disc 112 are larger than the holes 136 in the second disc 114.

Referring back to Figure 3, the knife 110 comprises a central aperture 116, a hub 118, and eight arms 120 extending outwards from the hub 118. The central aperture 116 is adapted to receive the driveshaft (not shown) in order to rotate the knife 110 in use. The knife 110 need not have eight arms; in alternative embodiments, knives may be provided with four arms, six arms or ten arms, for example. Further alternative arrangements are also envisaged. The knife 110 is integrally formed from a single piece of steel, for example. Alternatively, the arms 120 need not be integrally formed with the hub 118.

Each arm 120 of the knife 110 has respective first and second ends 140 and 142, the first end 140 being free and the second end 142 being connected to the hub 118 by means of a substantially annular portion 144 which surrounds the hub 118. An axial dimension of the annular portion 144 is less than that of the hub 118 such that the hub 118 protrudes axially from the annular portion 144.

Each arm 120 comprises a respective supporting portion 145 and a respective blade portion 146. The supporting portion 145 merges with and is integrally formed with the annular portion 144. On each arm, the blade portion 146 is positioned forward of the supporting portion 145 with respect to the rotational direction Z.

An axial dimension of the supporting portion 145 is the same as that of the annular portion 144, whereas an axial dimension of each blade portion 146 is greater than the axial dimension of the annular portion 144. As a result, the blade portions 146 protrude axially from the annular portion 144. Thus, in use, only the blade portions 146, and not the supporting portions 145, make contact with the discs 112 and 114.

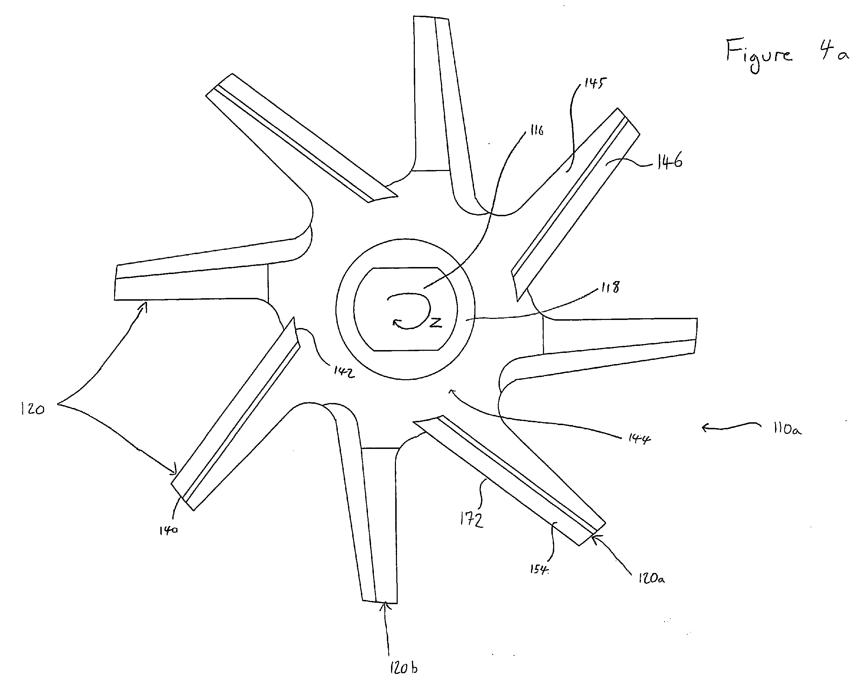

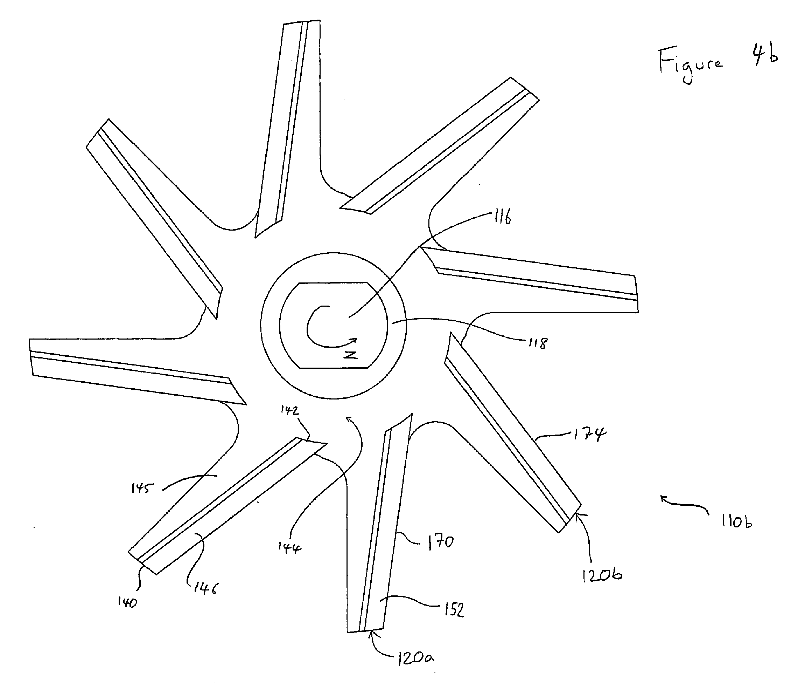

The knife 110 comprises two axial sides as illustrated in Figures 4a and 4b. Figure 4a shows a first side 110a of the knife 110, and Figure 4b shows a second side 110b of the knife 110.

With reference to Figure 3, the eight arms 120 comprise four primary arms 120a and four secondary arms 120b. The blade portions 146 of the primary arms 120a carry two blades 170 and 172. The blade portions 146 of the secondary arms 120b carry only a single blade 174. Thus, each primary arm 120a may be considered as an arm comprising blades 170 and 172 on both the first and second sides 110a and 110b of the knife 110 (one blade per side). In contrast, each secondary arm 120b may be considered as an arm comprising a blade 174 on only the second side 110b of knife 110. Hence, the first and second sides 110a and 110b of the knife 110 have different numbers of blades, as most clearly seen in Figures 4a and 4b.

As shown in Figures 3 and 4b, the second side 110b of the knife 110 has eight blades 170 and 174 (each blade carried by a respective primary arm 120a or secondary arm 120b). In contrast, as shown in Figures 3 and 4a, the first side 110a of the knife 110 has only four blades 172 (each blade carried by a respective primary arm 120a). Thus, the second side 110b of knife 110 has a greater number of blades than the first side 110a of the knife 110.

In the case of the primary arms 120a, each blade portion 146 comprises two surfaces 148a and 150a in a V-formation disposed between two parallel disc-engaging surfaces 152a and 154a such that each blade portion 146 has a substantially W-shaped profile when viewed from the first end 140a of the respective primary arm 120a. The V-formation of each primary arm blade portion 146 is arranged such that in use the V-formation points rearwardly with respect to the rotational direction Z of the knife 110.

In the case of the secondary arms 120b, each blade portion 146 comprises a surface 148b which corresponds to the respective primary arm surface 148a. The surface 148b meets a disc-engaging surface 152b. The disc-engaging surface 152b corresponds to the primary arm disc-engaging surface 152a. The surface 148b and the disc-engaging surface 152b meet at an angle to form a blade 174. In effect, the blade portion 146b of each secondary arm 120b is similar to the half of the blade portion 146a of each primary arm 120a that is disposed on the second side 110b of the knife 110.

The rotary knife according to the first embodiment of the present invention will now be described in use with reference to Figures 5a and 5b.

In use, the rotary knife 110 is positioned between the perforated discs 112 and 114 such that the first side 110a of the knife 110, comprising of the fewer total number of blades 172, faces the first disc 112. The second side 110b of the knife 110, comprising of the greater total number of blades 170 and 174, faces the second disc 114. However, it is within the scope of the invention for the opposite to be possible, in that the side of the knife 110 with the fewer total number of blades 172 may lie facing the disc 114 and the side of the knife 110 with the greater total number of blades 170 and 174 may lie facing the disc 112. Nonetheless, the preferred configuration has the first side 110a of the knife 110 facing the first disc 112 and the second side 110b of the knife 110 facing the second disc 114.

The disc-engaging surfaces 154 rotate flush with the exit surface 128 of the first disc 112, and the disc-engaging surfaces 152 rotate flush with the entry surface 130 of the second disc 114. As the meat emerges from the holes 134 in the exit surface 128 of the first disc 112, the blades 172 carried by the primary arms 120a of the knife 110 cut the meat as the knife 110 rotates. More specifically, the meat is cut by a scissor action between the edges/blades 172 and the edges of the holes 134. Friction and resistance are generated when the disc-engaging surfaces 154 move across the exit surface 128 of the first disc 112. As the meat is fed through the cutting apparatus in the direction of arrow W, the meat eventually enters the holes 136 in the entry surface 130 of the second disc 114 where the blades 170 and 174 carried by the primary arms 120a and secondary arms 120b of the knife 110 cut the meat a second time as the knife 110 rotates. More specifically, the meat is cut by a scissor action between the edges/blades 170 and 174 and the edges of the holes 136. Friction and resistance are generated when the disc-engaging surfaces 152 move across the entry surface 130 of second disc 114.

Therefore, since the first side 110a of the knife 110 has fewer disc-engaging surfaces 154 than the number of disc-engaging surfaces 152 on the second side 110b of the knife 110, less friction and resistance are generated on the first side 110a of the knife 110. This increases the lifetime of the knife 110 as well as improving the overall efficiency of the meat-cutting process by reducing overall friction and wear. Additionally, the cutting of the meat on the second side 110b of the knife 110 is performed by more blades 170 and 174 than the cutting of the meat on the first side 110a of the knife 110 (performed by the blades 172). As a result, the meat is cut more finely on the second side 110b than when first cut by the blades 172 on the first side 110a. Thus, over-processing of the meat can be avoided or at least reduced when compared to prior art knives. The efficiency of the meat-cutting is therefore increased.

The first embodiment of the knife 110 as shown in Figure 3 has a relatively simple form. Numerous modifications can be made without departing from the scope of the invention. For instance, a knife according to the present invention may also incorporate the serrations of the prior art rotary knife as shown in Figure 2.

In the embodiment of Figure 3, each arm 120 carries at most one blade 170, 172 and 174 on each side 110 and 110b of the knife 110. Alternative embodiments are envisaged where one or more of the arms 120 carries a plurality of blades on either the first side 110a or the second side 110b or both sides 110a and 110b of the knife 110. For instance, one or more of the primary arms 120a may carry two or more blades on the second side 110b of the knife 110 and/or two or more blades on the first side 110a of the knife 110. Alternatively, one or more of the secondary arms 120b may comprise two or more blades on the second side 110b of the knife 110. As long as the second side 110b of the knife 110 has a greater total number of blades than the first side 110a of the knife 110, any number of combinations of pluralities of blades 170, 172 and 174 is possible to be displayed by the arms 120.

Another way of providing a plurality of blades per arm is to provide blades that are not continuous along the length of the arms 120. For example, the blade portions 146 may be discontinuous along the length of the arms 120 such that a plurality of sub-blades is formed along the length of any given arm 120. Such sub-blades may additionally be offset from one another.

One of the aims of the invention is to reduce friction and resistance generated as a result of the cutting process. In prior art systems, the dimensions and the number of the holes in the discs can be increased in order to decrease the friction and resistance generated as a result of the rotational motion of the knife against the discs. However, this has the disadvantage of requiring a greater number of arms, and hence a greater number of blades, to be brought to bear on the meat in order to maintain a steady rate of cutting.

In contrast, the present invention, without modifying the hole number/dimensions of the discs, achieves a reduction in friction and resistance through the use of a reduced number of blades 172 on the first side 110a of the knife 110 which in turn leads to a reduction in the energy required to cut the meat. As a result, stress on the blades 170, 172 and 174 and the arms 120 is also reduced. Additionally, because the knife 110 requires fewer blades than prior art knives 10, the knife 110 is cheaper to manufacture.

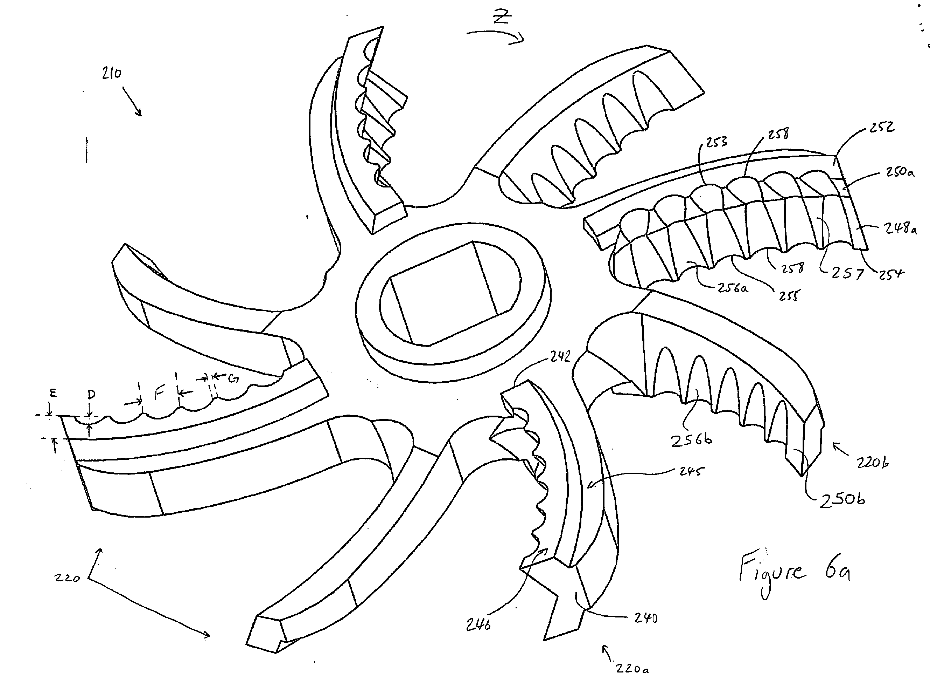

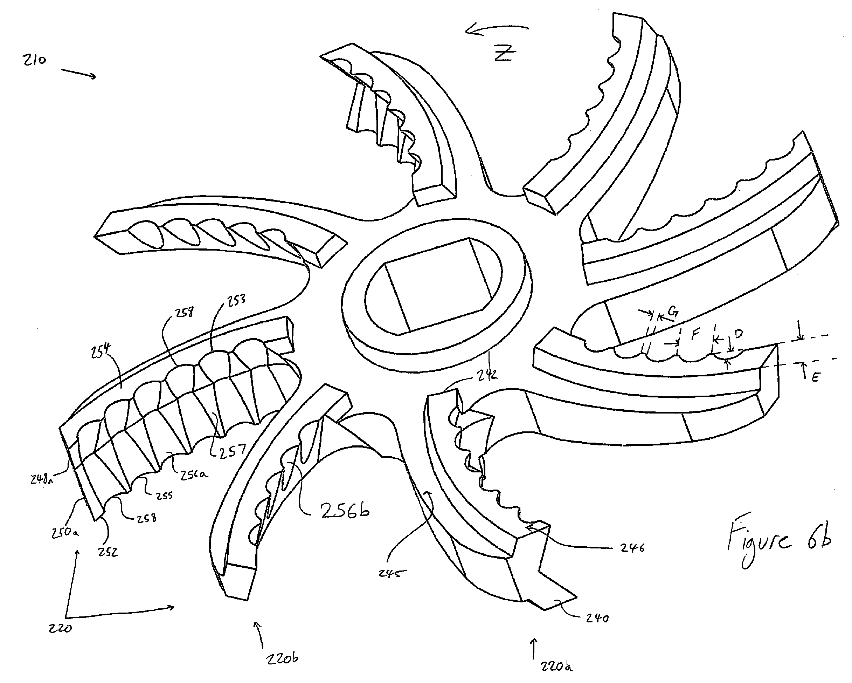

A second embodiment of a rotary knife 210 in accordance with the present invention is shown in Figures 6a and 6b. The knife 210 of the second embodiment is similar to the knife 110 of the first embodiment in many respects (e.g. more blades on the second side of the knife than on the first side of the knife). Therefore, only the key differences will be described below. Note that reference numerals in the two-hundreds are used for the rotary knife 210 of the second embodiment, as compared to similar reference numerals in the one-hundreds used for the rotary knife 110 of the first embodiment.

In Figures 6a and 6b, each arm 220 is arcuate between the respective first and second ends 240 and 242 of the arm 220. Thus, the blade portions 246 and the supporting portions 245 are also arcuate between the first and second ends 240 and 242 of the respective arms 220. The use of curved arms 220 is advantageous because the cutting length of each blade portion 246 is increased (i.e. a curved line between two points is longer than a straight line between the same two points).

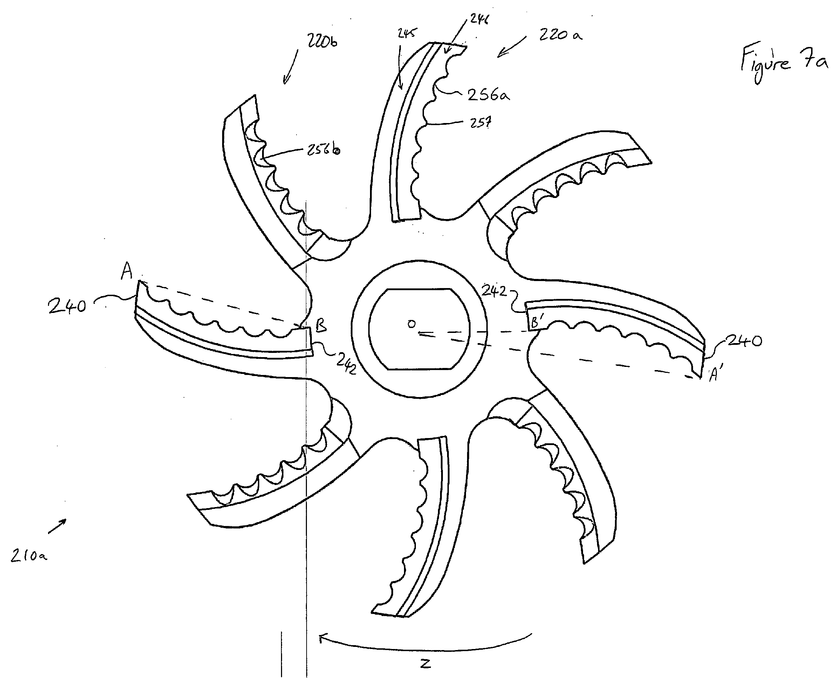

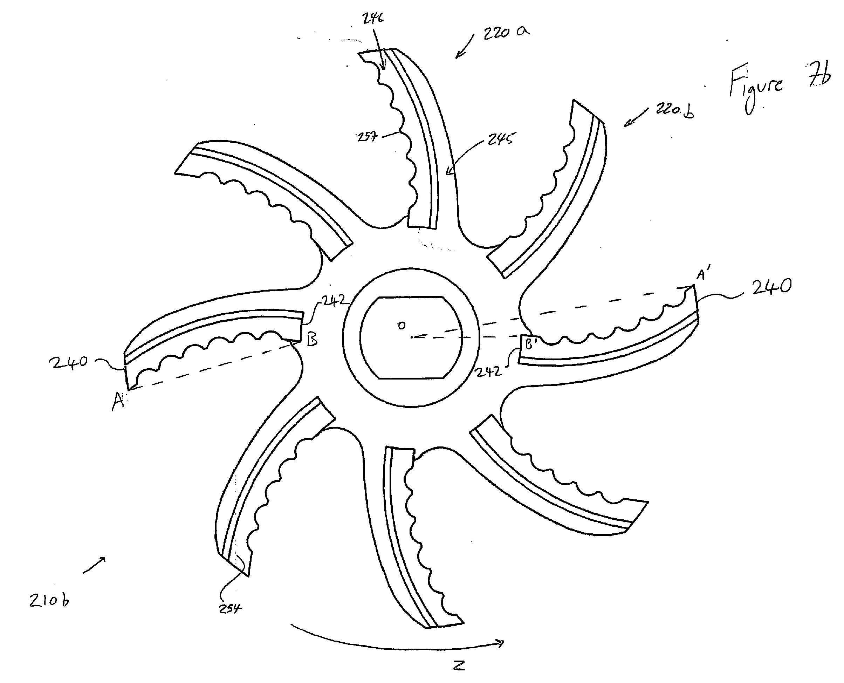

In this embodiment, the arc of each arm 220 is concave. This is seen more clearly in Figures 7a and 7b which show opposite axial views of the knife 210. Line AB is a straight line connecting the first end 240 of the blade portion 246 to the second end 242 of the same blade portion 246. Thus, the concave blade portion 246 bows rearwardly from line AB relative to the rotational direction Z.

Furthermore, the concave arc of each blade portion 246 is arranged such that the first end 240 is forward of the second end 242 with respect to the rotational direction Z. Again, this is clearly seen in Figures 7a and 7b. Line OA' is a straight line connecting the rotational axis (indicated as a point O in this view) to the first end 240 of the blade portion 246, and line OB' is a straight line connecting the rotational axis to the second end 242 of the same blade portion 246. Thus, the line OA' is forward of the line OB' relative to the rotational direction Z.

Looking at each primary arm 220a, each blade portion 246 further comprises a plurality of channels 256a extending across the surfaces 248a and 250a defining the V-formation of the blade portion 246 that is disposed between the disc-engaging surface 254 and the disc-engaging surface 252. Thus, the channels 256a run in a substantially axial direction. Each channel 256 has an arcuate cross-section. Arcuate cross-sections 258 at the disc-engaging surfaces 252 and 254 are approximately semi-circular. Thus, the disc-engaging surfaces 252 and 254 comprise scalloped edges 253 and 255 respectively. A depth D of the channels 256a at the disc-engaging surfaces 252 and 254 is approximately half of a corresponding circumferential dimension E of the blade portions 246 at the disc-engaging surfaces 252 and 254. The depth of the channels 256 varies along the length of the channels 256 such that the depth of the channels 256 decreases towards the centre of the channels 256. Similarly, a width F of the channels 256 varies along the length of the channels 256 such that the width of the channels 256 decreases towards the centre of the channels 256. Thus, ridges 257 between the channels 256 have a width G that increases towards the centre of the ridges 257.

Looking at each secondary arm 220b, each blade portion 246 also comprises a plurality of channels 256b. The channels 256b extend across the surface 250b but terminate such that the channels 256b do not extend across the full axial length of the respective surface 250b of each blade portion 246. The channels 256 on each blade portion 246 are radially offset from the channels 256 on adjacent blades 246. Again, this is seen more clearly in Figures 7a and 7b. Four primary arms 220a comprise six channels 256a, and four secondary arms 220b comprise five channels 256b. Each primary arm 220a is adjacent to two respective secondary arms 220b. The channels 256b of the secondary arms 220b are located at the same radial positions as the ridges 257 between the channels 256a of the primary arms 220a.

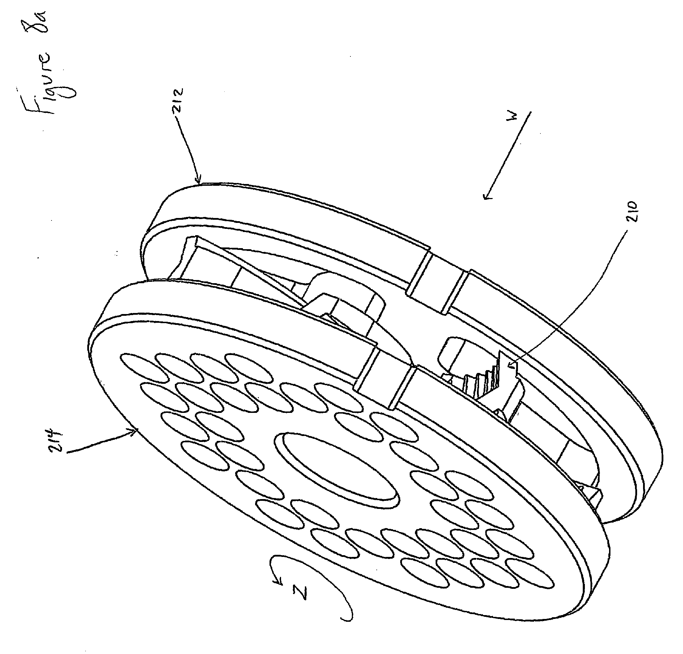

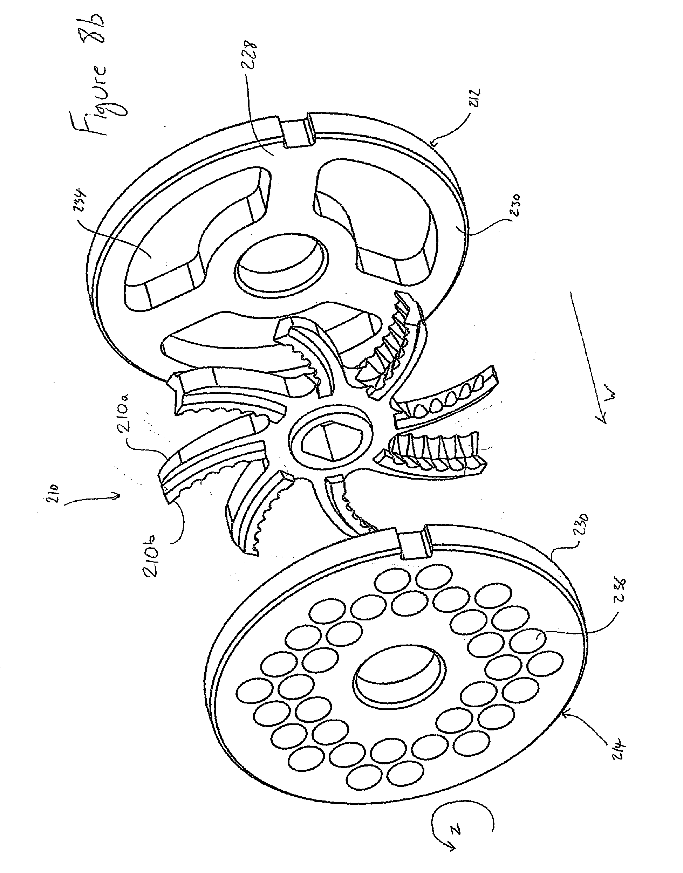

The rotary knife according to the second embodiment of the present invention will now be described in use with reference to Figures 8a and 8b.

Meat is fed through the processor in the direction indicated by arrow W. As the meat exits the holes 234 in the exit surface 230 of the first disc 212, the blades 272 carried by the primary arms 220a of the knife 210 cut the meat as the knife 210 rotates. More specifically, the meat is cut by a scissor action between the edge of the blades 272 and the edges of the holes 234.

In use, the channels 256 assist in moving the meat efficiently from the exit surface 228 of the first disc 212 to the entry surface 230 of the second disc 214. Meat that has been cut as it emerged from the first disc 212 is channelled along the channels 256 towards the second disc 214. Thus, since the channels 256 are oriented substantially axially (i.e. parallel to the direction W), meat takes an efficient (i.e. short) route between the discs 212 and 214. As a result, meat moves more efficiently through the food processor in direction W so that less power is required to process a given amount of meat in a given time.

Furthermore, as the width F and the depth D of the channels 256 decreases, there is a degree of compaction of the meat as it moves along the axial length of the channels 256 from one side of the knife 210 to the other side of the knife 210.

The efficiency of a food processor incorporating the knife 210 is further increased by the concave curved blade portions 246 which help to retain meat, for example, in the area swept by the blade portions 246 so that less meat escapes around the first ends 240 of the arms 220. This is further helped by the concave arc of each blade portion 246 being arranged such that the first end 240 is forward of the second end 242 with respect to the rotational direction Z. In addition, since the meat is retained by the curved arms 220, the meat movement has a smaller radial component than in the prior art, so there is less shearing and a cleaner cut is achieved using the present knife 220. The ridges 257 between the channels 256 also prevent meat sliding radially with respect to the blade portions 246 by acting as barriers between the channels 256.

As the meat enters the holes 236 in the entry surface 230 of the second disc 214, the blades 270 and 274 carried by primary arms 220a and secondary arms 220b of the knife 210 cut the meat for a second time as the knife 210 rotates. More specifically, the meat is cut by a scissor action between the edge of the blades 270 and 274 and the edges of the holes 236. Since meat moves more easily through the food processor, there is reduced pressure on the knife 210 and discs 212 and 214, so these components will last longer.

In an alternative arrangement to that illustrated in Figures 8a and 8b, an industrial food processor may additionally contain a second knife and a third disc such that the configuration of components within the tubular housing comprises two knives interposed between three discs in a disc-knife-disc-knife-disc arrangement.

In this arrangement, a first knife according to the present invention may be positioned between the first disc and the second disc. The first knife may comprise, for example, four blades on the first side and eight blades on the second side. Preferably, the first side of the first knife faces the first disc. The second knife is positioned between the second disc and the third disc. The second knife may also comprise four blades on the first side and eight blades on the second side. Preferably, the first side of the second knife faces the second disc. Thus, when meat is passed through food processor, it is cut first by the four blades on the first side of the first knife, then by the eight blades on the second side of the first knife, then by the four blades on the first side of the second knife, and finally by the eight blades on the second side of the second knife.

Advantageously, friction generation is much reduced as a result of a decrease in the cutting action between the first and second discs and the disc-engaging surfaces of the blades on the first sides of the first and second knives, respectively. Furthermore, a more gradual and even cutting of the meat is provided as the meat moves through the machine.

The above arrangement is merely exemplary, and the knives may comprise any number of blades on their respective first and second sides. For instance, there may be two blades displayed on the first side of the first knife, four blades displayed on the second side of the first knife, six blades displayed on the first side of the second knife, and eight blades displayed on the second side of the second knife. This arrangement would achieve a progressively finer and finer cutting of the meat as it is fed through the machine. Friction and resistance would also be much reduced compared to prior art knives.

Although preferred embodiments of the invention have been described here with reference to processing meat in an industrial food processor, it is to be understood that this is by way of example only and that various modifications may be contemplated. For example, other foodstuffs such as cheese or vegetables may be processed instead of meat. In a further alternative embodiment, the rotary knife and cutting apparatus may be used in other areas, such as the processing of waste materials, pharmaceuticals, or meat by-products such as offal. Further alternative embodiments are also envisaged.

## Claims

1. A rotary knife for use in a cutting apparatus, the rotary knife comprising:
a central hub defining an axis of rotation of the knife;
first and second sides of the knife spaced apart in the axial direction;
a plurality of arms extending outwardly from the hub; and
a plurality of blades carried by the arms such that a number of blades disposed on the second side of the knife is greater than a number of blades disposed on the first side of the knife.

2. The rotary knife of Claim 1, wherein:
the plurality of arms comprises one or more primary arms and one or more secondary arms;
each primary arm carries a respective blade on the first side of the knife and a respective blade on the second side of the knife; and
each secondary arm carries a respective blade on the second side of the knife only.

3. The rotary knife of Claim 1 or 2, wherein one or more of the arms carries a plurality of blades on at least one of the first and second sides of the knife.

4. The rotary knife of Claim 2, or Claim 3 when dependent on Claim 2, wherein the number of primary arms is the same as the number of secondary arms of the knife.

5. The rotary knife of Claim 2, or any of Claims 3 and 4 when dependent on Claim 2, wherein the arms of the knife alternate between primary and secondary arms such that no two primary arms are adjacent to one another and no two secondary arms are adjacent to one another.

6. The rotary knife of any preceding claim, wherein each arm carries a respective blade on the second side of the knife.

7. The rotary knife of any preceding claim, wherein each arm has respective channels extending across a surface of the arm in a direction substantially parallel to the axis of rotation.

8. The rotary knife of any preceding claim, wherein each arm has a respective end that is free and a respective end that merges with the hub, each arm being arcuate between the respective free end and the respective hub end.

9. The rotary knife of any preceding claim, wherein the central hub and the arms are integrally formed.

10. A cutting apparatus comprising the rotary knife of any preceding claim.

11. The cutting apparatus of Claim 10, wherein the cutting apparatus is an industrial food processor.

12. The cutting apparatus of Claim 10 or 11, wherein the cutting apparatus is a meat grinder.

13. The cutting apparatus of any of Claims 10 to 12, further comprising a first perforated disc disposed on the first side of the knife and a second perforated disc disposed on the second side of the knife such that the knife is coaxially aligned between the first and second discs.

14. The cutting apparatus of Claim 13, wherein a dimension of the perforations of the first perforated disc is greater than a dimension of the perforations of the second perforated disc.
